# EUROPÄISCHE PATENTSCHRIFT

(11) **EP 0 529 231 B1**
(45) Veröffentlichungstag und Bekanntmachung des Hinweises auf die Patenterteilung: **01.03.1995**
(21) Anmeldenummer: 92110702.5
(22) Anmeldetag: 25.06.1992
(51) Int. Cl.: B21L 3/02, B23K 11/02

(54) **Vorrichtung zum Stumpfschweissen von Kettengliedern**
Apparatus for the butt welding of chain links
Appareil pour la soudure bout à bout des maillons de chaîne

(30) Priorität: 23.08.1991 DE 4128066
(43) Veröffentlichungstag der Anmeldung: 03.03.1993
(73) Patentinhaber: MEYER, ROTH & PASTOR Maschinenfabrik GmbH, D-50968 Köln (DE)
(72) Erfinder: Exner, Karl-Christoph, Dr., W-5000 Köln 90 (DE); Baumstark, Josef, W-5300 Bonn 1 (DE); Becker, Horst, W-5000 Köln 51 (DE)
(74) Vertreter: König, Reimar, Dr.-Ing.

(56) Entgegenhaltungen:
- GB-A- 1 128 412
- US-A- 3 131 282

## Beschreibung

Die Erfindung betrifft eine Vorrichtung zum Stumpfschweißen von Kettengliedern aus C-förmig vorgebogenen und ineinander gehängten Drahtabschnitten (siehe z.B. US-A- 3131282).

Bei bekannten Vorrichtungen, wie sie beispielsweise in der deutschen Offenlegungsschrift 1 627 715 und der deutschen Patentschrift 23 47 768 beschrieben sind, werden die Enden der vorgebogenen, ineinander gehängten Kettenglieder Glied für Glied elektrisch stumpf verschweißt, wobei nach jedem Schweißen wenigstens das jeweils als nächstes zu schweißende Kettenglied abwechselnd in der einen Richtung oder der entgegengesetzten Richtung um seine Längsachse gedreht wird.

Das Biegen der Kettenglieder und das Stumpfschweißen der Enden der vorgebogenen, ineinander gehängten Kettenglieder erfolgt grundsätzlich in getrennten Arbeitsgängen, auch wenn, wie in der deutschen Offenlegungsschrift 1 627 715 beschrieben, eine Schweißstation in der Kettenbiegemaschine unmittelbar im Anschluß an eine Halte- und Drehvorrichtung für die Kette angeordnet ist. Bei dieser bekannten Schweißmaschine werden die Kettenenden mittels Klemmbacken gegeneinander gedrückt, während Elektroden die Schweißstromzufuhr bewirken.

Bei dieser bekannten Vorrichtung sowie bei der aus der deutschen Patentschrift 23 47 768 bekannten Vorrichtung hängt die Herstellgeschwindigkeit einer Kette grundsätzlich von der Arbeitsgeschwindigkeit der Schweißstation ab; sie ist unter anderem durch das erforderliche Drehen der Kettenglieder bedingt.

Nachteilig ist des weiteren, daß stets eine besondere Vorrichtung zum Stumpfschweißen der Kettenglieder erforderlich ist, wodurch sich der Bauaufwand und damit der Kostenaufwand erhöht.

Der Erfindung liegt die Aufgabe zugrunde, eine Vorrichtung zum Stumpfschweißen von Kettengliedern zu schaffen, die einfach aufgebaut ist, mit der Geschwindigkeit einer Kettenbiegemaschine arbeitet und dabei qualitativ hochwertige stumpfgeschweißte Güteketten herzustellen gestattet.

Diese Aufgabe wird mit den im Anspruch 1 angegebenen Merkmahlen gelöst. Vorteilhafte Weiterbildungen ergeben sich aus den abhängigen Ansprüchen.

Die Erfindung geht von der Überlegung aus, daß ein besonderes Problem beim gleichzeitigen Biegen und Schweißen eines Kettengliedes in der Stromübertragung auf das Kettenglied liegt. Treten nämlich zwischen dem Kettenglied und einer Elektrode Relativbewegungen an der Berührungsfläche auf, kann dies zu sehr hohen Übergangswiderständen führen, die zu einem lokalen Brennen und Beschädigungen an der Elektrode und dem Kettenglied führen sowie eine qualitativ hochwertige Stumpfschweißung verhindern.

Die Lösung der vorerwähnten Aufgabe besteht nun ausgehend von der vorstehenden Überlegung darin, daß bei einer Vorrichtung der eingangs erwähnten Art erfindungsgemäß an eine Schweißmaschine Elektroden bildende Rollstähle zum fertigbiegen der vorgebogenen Kettenglieder angeschlossen sind, die mittels einer Schwenkverbindung mit zum Einrollen des vorgebogenen Kettengliedes in das Endglied eines Kettenstrangs beweglichen Rollstahlhaltern verbunden sind.

Die Schwenkverbindung gewährleistet, daß zwischen den als Schweißelektroden geschalteten Rollstählen und dem vorgebogenen Kettenglied beim Einrollen keinerlei einen hohen Übergangswiderstand erzeugende Relativbewegungen möglich sind, so daß der volle Schweißstrom von den Rollstählen in das vorgebogene Kettenglied gelangt und in kürzester Zeit das erforderliche Erwärmen der Enden des vorgebogenen Kettengliedes bewirkt.

Vorteilhafterweise liegt der Schwenkmittelpunkt der Schwenkverbindung innerhalb des vorgebogenen Kettengliedes, um möglichst geringe Bewegungen des vorgebogenen Kettengliedes beim Biegen-, Erwärmen- und Stauchen zu gewährleisten. Eine solche Schwenkverbindung mit einem Schwenkmittelpunkt innerhalb des vorgebogenen Kettengliedes läßt sich auf einfache Weise durch kreisbogenförmig einander zugekehrte Flächen der Rollstahlhalter und der Rollstähle erreichen, deren gemeinsamer Mittelpunkt innerhalb des vorgebogenen Kettengliedes liegt.

Um die Reibung zwischen den Rollstahlhaltern und den Rollstählen herabzusetzen, können zwischen ihnen Rollkörper angeordnet sein.

Ein festes Anliegen des Drahtstücks an den beiden Rollstählen ergibt sich, wenn in das vorgebogene Kettenglied eingreifende, scherenartig aufspreizbare, formgebende Innendorne Verwendung finden.

Des weiteren läßt sich das Biegen-, Erwärmen- und Stauchen erleichtern und beschleunigen, wenn das letzte fertige Kettenglied durch eine Halte- bzw. Positionierzange in der für das Fertigbiegen und Stumpfschweißen erforderlichen Querlage gehalten wird.

Da der Kettengliedbogen die Stelle der höchsten mechanischen Beanspruchung des Kettengliedes ist, während die Stelle der geringsten mechanischen Beanspruchung im geraden Kettengliedschenkel liegt, können die Rollstähle so gestaltet sein, daß sie das vorgebogene Kettenglied im Kettengliedbogen ergreifen und die geraden Kettengliedschenkel beim Biegen-, Erwärmen- und Stauchen gegeneinander bewegen, so daß die Schweißstelle im geraden Kettenschenkel liegt.

Um beim Schweißen einen möglichst kleinen Grat zu erreichen, können die Enden der Drahtabschnitte angespitzt sein, so daß das den Grat bildende Material in der umlaufenden Kerbe verschwindet und lediglich ein kleiner Schweißgrat entsteht, der sich leicht in einem Gesenk glätten läßt.

Die Erfindung wird nachstehend anhand eines in der Zeichnung schematisch dargestellten Ausführungsbeispiels des näheren erläutert. In der Zeichnung zeigen
- Fig. 1: eine erfindungsgemäße Vorrichtung nach dem Einlegen eines vorgebogenen Kettengliedes vor dem Biegen-, Erwärmen- und Stauchen und
- Fig. 2: die Vorrichtung mit einem fertiggeschweißten Kettenglied.

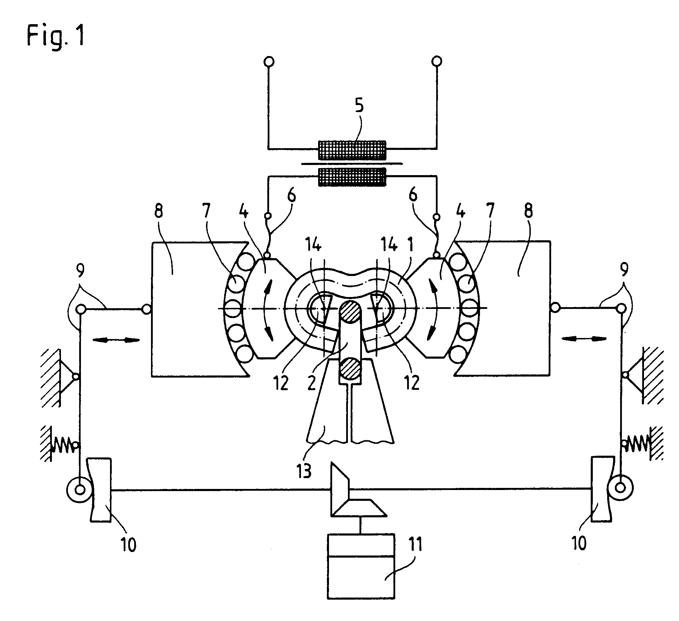

Um ein vorgebogenes Kettenglied 1 in die Vorrichtung einlegen zu können, wird ein gerades Drahtstück zunächst etwa U-förmig gebogen. Alsdann werden die hochgebogenen Enden auswärts C-förmig gebogen und bis zu der in Fig. 1 dargestellten Stellung zusammengedrückt. Nach dem Einlegen des letzten fertiggeschweißten Kettengliedes 2 (Endglied) zwischen das vorgebogene Kettenglied 1 werden die freien Enden des C-förmigen Drahtstücks mittels der Rollstähle 4 in die Schweißlage gebracht.

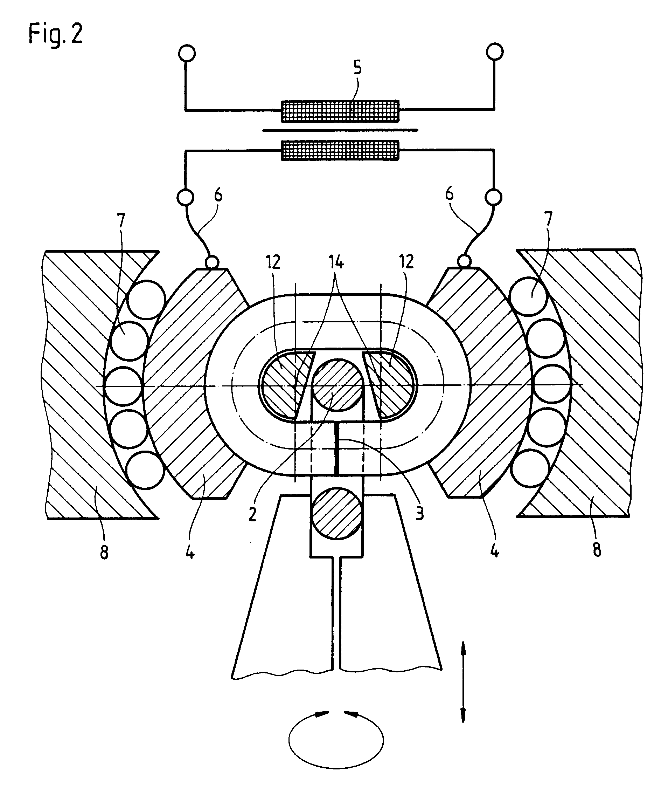

In Fig. 2 ist ein zwischen den Rollstählen 4 angeordnetes, fertiggeschweißtes Kettenglied 2 dargestellt, das am Schweißstoß 3 verschweißt ist.

Die Rollstähle 4 sind als Schweißelektroden geschaltet und daher über bewegliche Anschlüsse 6 mit einem Schweißtransformator 5 verbunden, der Teil einer im einzelnen nicht dargestellten Schweißmaschine ist.

Die Rollstähle 4 sind über Schwenkverbindungen 7 mit Rollstahlhaltern 8 verbunden. Die Schwenkverbindungen 7 bestehen aus Rollkörpern, die zwischen kreisbogenförmigen Außenflächen der Rollstähle 4 und komplementären Kreisbogenflächen der Rollstahlhalter 8 angeordnet sind. Zum Einrollen des vorgebogenen Kettengliedes 1 werden die Rollstahlhalter 8 über ein Hebelsystem 9 und Ablaufkurven 10 mittels eines Antriebs 11 aufeinanderzubewegt, bis sich die freien Enden berühren und das Schweißen in der üblichen Weise abläuft. Um ein festes Anliegen des vorgebogenen Kettengliedes 1 an den Rollstählen 4 zu gewährleisten, greift in das Innere der vorgebogenen Kettenglieder 1 ein scherenartig aufspreizbarer Innendorn 12 ein, der gleichzeitig auch formgebend wirkt.

Das letzte fertiggeschweißte Kettenglied 2, bei dem es sich auch um das Anfangsglied einer Kette handeln kann, wird mittels einer Halte- bzw. Positionierzange 13 in der für das Schweißen erforderlichen Querlage zwischen den beiden Rollstählen 4 gehalten, ohne das vorgebogene Kettenglied zu berühren. Die Halte- bzw. Positionierzange 13 ist um 180° schwenkbar, um das jeweils gerade fertiggeschweißte Kettenglied 2 ergreifen zu können und um 90° zu drehen.

Da beim Fertigbiegen zwischen den Rollstählen 4 und dem vorgebogenen Kettenglied 1 keine Relativbewegungen auftreten, wird das vorgebogene Kettenglied um einen Schwenkmittelpunkt 14 gebogen, der gleichzeitig Schwenkmittelpunkt für die Rollstähle 4 ist, ergibt sich ein sicherer Kontakt zwischen den Rollstählen 4 und dem vorgebogenen Kettenglied 1 mit geringem Übergangswiderstand, so daß sich einwandfreie Stumpfschweißungen mit hoher Festigkeit und in kürzester Zeit erreichen lassen.

## Patentansprüche

1. Vorrichtung zum Stumpfschweißen von Kettengliedern (1) aus C-förmig vorgebogenen und ineinander gehängten, Drahtabschnitten gekennzeichnet durch
- an eine Schweißmaschine (5) angeschlossene, Schweißelektroden bildende Rollstähle (4) und
- eine Schwenkverbindung (7) zwischen den Rollstählen (4) und zum Einrollen der vorgebogenen Kettenglieder (1) in das Endglied eines Kettenstrangs (1) beweglichen Rollstahlhaltern (8).

2. Vorrichtung nach Anspruch 1, dadurch gekennzeichnet, daß die Schwenkverbindung (7) ihren Schwenkmittelpunkt (14) innerhalb des vorgebogenen Kettengliedes (1) hat.

3. Vorrichtung nach Anspruch 2, dadurch gekennzeichnet, daß die jeweils einander zugekehrten Flächen der Rollstahlhalter (8) und der Rollstähle (4) kreisbogenförmig mit einem gemeinsamen Mittelpunkt (14) innerhalb des vorgebogenen Kettengliedes (1) ansgebildet sind.

4. Vorrichtung nach Anspruch 3, dadurch gekennzeichnet, daß zwischen den Rollstahlhaltern (8) und den entsprechenden Rollstählen (4) Rollkörper (7) angeordnet sind.

5. Vorrichtung nach einem oder mehreren der Ansprüche 1 bis 4, gekennzeichnet durch in das vorgebogene Kettenglied (1) eingreifende, scherenartig aufspreizbare formgebende Innendorne (12).

6. Vorrichtung nach einem oder mehreren dr Ansprüche 1 bis 5, gekennzeichnet durch eine Halte- bzw. Positionierzange (13) zum Halten des letzten fertigen Kettenglieds (2) in eine Querlage.

7. Vorrichtung nach einem oder mehreren der Ansprüche 1 bis 6, dadurch gekennzeichnet, daß die Rollstähle (4) das vorgebogene Kettenglied (1) im Kettengliedbogen ergreifen und die geraden Kettengliedschenkel beim Biegen-, Erwärmen- und Stauchen gegeneinanderbewegen.

8. Vorrichtung nach einem oder mehreren der Ansprüche 1 bis 7, dadurch gekennzeichnet, daß die Enden der Drahtabschnitte angespitzt sind.

## Claims

1. Apparatus for butt welding chain links (1) from portions of wire pre-bent to a C-shape and hooked inside one another, characterised by having
- roller tools (4) connected to a welding apparatus (5) and forming welding electrodes, and
- a pivot connection (7) between the roller tools (4) and roller tool holders (8) movable to roll the pre-bent chain links (1) into the end link of a length of chain (1).

2. Apparatus according to claim 1, characterised in that the pivot connection (7) has its pivot centre (14) inside the pre-bent chain link (1).

3. Apparatus according to claim 2, characterised in that the respective faces of the roller tool holders (8) and the roller tools (4) which face one another are of arcuate form with a common centre (14) inside the pre-bent chain link (1).

4. Apparatus according to claim 3, characterised in that rollers (7) are arranged between the roller tool holders (8) and the corresponding roller tools (4).

5. Apparatus according to one or more of claims 1 to 4, characterised by having, engaging in the pre-bent chain link (1), internal mandrels (12) which can be spread out in a scissor-like manner.

6. Apparatus according to one or more of claims 1 to 5, characterised by having a set of retaining or positioning jaws (13) to hold the last-completed chain link (2) in a transverse position.

7. Apparatus according to one or more of claims 1 to 6, characterized in that the roller tools (4) engage with the arcuate parts of the pre-bent chain link (1) and move the straight limbs of the chain link against one another on bending, heating up and upsetting.

8. Apparatus according to one or more of claims 1 to 7, characterized in that the ends of the portions of wire are pointed.

## Revendications

1. Appareil pour souder, bout à bout, des maillons de chaînes (1) constitués par des tronçons de fil métallique préalablement cintrés en C et suspendus les uns dans les autres, caractérisé par
- des sabots de roulage (4), formant des électrodes de soudage et raccordés à une machine de soudage (5), et
- une liaison pivotante (7) entre les sabots de roulage (4) et des porte-sabots (8) mobiles afin d'enrouler, dans le maillon extrême d'un segment de chaîne (1), les maillons de chaînes (1) préalablement cintrés.

2. Appareil selon la revendication 1, caractérisé par le fait que le centre de pivotement (14) de la liaison pivotante (7) se trouve à l'intérieur du maillon de chaîne (1) préalablement cintré.

3. Appareil selon la revendication 2, caractérisé par le fait que les surfaces des porte-sabots (8) et des sabots de roulage (4), qui sont respectivement tournées les unes vers les autres, sont réalisées de configuration en arc de cercle avec un centre commun (14) situé à l'intérieur du maillon de chaîne (1) préalablement cintré.

4. Appareil selon la revendication 3, caractérisé par le fait que des corps de roulement (7) sont interposés entre les porte-sabots (8) et les sabots de roulage (4) correspondants.

5. Appareil selon l'une ou plusieurs des revendications 1 à 4, caractérisé par des mandrins intérieurs (12) de mise en forme, qui peuvent être écartés à la manière de ciseaux et pénètrent dans le maillon de chaîne (1) préalablement cintré.

6. Appareil selon l'une ou plusieurs des revendications 1 à 5, caractérisé par une pince (13) de retenue ou de positionnement conçue pour arrêter, dans une position transversale, le dernier maillon de chaîne (2) achevé.

7. Appareil selon l'une ou plusieurs des revendications 1 à 6, caractérisé par le fait que les sabots de roulage (4) saisissent le maillon de chaîne (1), préalablement cintré, dans l'arc de cercle dudit maillon, et déplacent l'une vers l'autre les branches rectilignes du maillon de chaîne lors du cintrage, du chauffage et de la compression.

8. Appareil selon l'une ou plusieurs des revendications 1 à 7, caractérisé par le fait que les extrémités des tronçons de fil métallique sont appointées.
